# EUROPEAN PATENT APPLICATION

(11) **EP 4 693 349 A1**
(43) Date of publication of application: **11.02.2026**
(21) Application number: 24777456.5
(22) Date of filing: 18.01.2024
(51) Int. Cl.: H01F 7/18, B60L 13/04

(54) **ELECTROMAGNET CURRENT CONTROL METHOD AND RELATED ASSEMBLY**

(30) Priority: 29.03.2023 CN 202310325775
(71) Applicant: CRRC Qingdao Sifang Co., Ltd., Qingdao, Shandong 266111 (CN)
(72) Inventor: JIANG, Shouliang, Qingdao, Shandong 266111 (CN); WU, Donghua, Qingdao, Shandong 266111 (CN); FU, Shanqiang, Qingdao, Shandong 266111 (CN); DING, Sansan, Qingdao, Shandong 266111 (CN); ZHANG, Zhiqiang, Qingdao, Shandong 266111 (CN); GU, Shaopeng, Qingdao, Shandong 266111 (CN); ZHU, Tianliang, Qingdao, Shandong 266111 (CN); LIU, Ning, Qingdao, Shandong 266111 (CN)
(74) Representative: Prinz & Partner mbB
(86) International application number: PCT/CN2024/072959
(87) International publication number: WO 2024/198661

(57) **Abstract**

Disclosed are an electromagnet current control method and a related assembly, which relate to the field of maglev train control. First, a current difference between a preset current and an actual current of an electromagnet is determined, the sum of the preset current and the current difference is used as a current increment, and the sum of the preset current, the current difference, and a preset current offset is used as a current negative increment, wherein the preset current offset is a negative value. Finally, a manner of adjusting a current on the electromagnet and a rate of adjusting the current is determined by combining a result of comparing the current increment with the actual current and a result of comparing the current negative increment with the actual current. Due to the fact that four comparison results can be obtained, the current on the electromagnet can be adjusted according to different comparison results, so that adjustment of the current on the electromagnet is more detailed and more accurate.

## Description

The present application claims the priority to Chinese Patent Application No.202310325775.5, titled "ELECTROMAGNET CURRENT CONTROL METHOD AND RELATED ASSEMBLY", filed on March, 29, 2023 with the China National Intellectual Property Administration, which is incorporated herein by reference in its entirety.

### FIELD

The present disclosure relates to the field of maglev train control, and in particular to a method for controlling a current flowing through an electromagnet and a related assembly.

### BACKGROUND

Maglev trains develop rapidly with the progress of science and technology. Maglev trains achieve contactless levitation and guidance between the train and the track through electromagnetic force, and propel the train using the electromagnetic force generated by linear motors. Since the magnetic force of the track of the maglev train levitates the maglev train in the air, reducing friction, both the speed and comfort of the maglev train are greatly improved compared with traditional modes of transportation. Currently, magnetic levitation can be achieved in various manners, while the control of the current flowing through the electromagnet in the maglev trains is a core part of the maglev train control. Therefore, it is of great importance to control the current flowing through the electromagnet in maglev trains in a more refined and precise manner.

### SUMMARY

The objective of the present disclosure is to provide a method for controlling a current flowing through an electromagnet and a related assembly, to adjust the current flowing through the electromagnet in a refined and precise manner.

In order to solve the technical problem described above, a method for controlling a current flowing through an electromagnet is provided in the present disclosure, and the method includes:
determining a current difference between a preset current and an actual current of the electromagnet;
determining a sum of the preset current and the current difference as a current increment, and determining a sum of the preset current, the current difference and a preset current offset as a current decrement, where the preset current offset is a negative value; and
adjusting the current flowing through the electromagnet and determining an adjustment rate for the adjustment, based on a comparison result obtained by comparing the current increment with the actual current and comparing the current decrement with the actual current.

In an embodiment, the determining a current difference between a preset current and an actual current of the electromagnet includes:
obtaining a filtered preset current outputted by a first low-pass filter, where the filtered preset current is obtained by filtering the preset current via the first low-pass filter;
obtaining a filtered actual current outputted by a second low-pass filter, where the filtered actual current is obtained by filtering the actual current via the second low-pass filter; and
determining a difference between the filtered preset current and the filtered actual current, and determining the difference as the current difference.

In an embodiment, after the determining a current difference between a preset current and an actual current of the electromagnet, the method further includes:
determining a maximum value in a preset current difference range as the current difference, in response to the current difference being greater than the maximum value in the preset current difference range; and
determining a minimum value in the preset current difference range as the current difference, in response to the current difference being less than the minimum value in the preset current difference range.

In an embodiment, the adjusting the current flowing through the electromagnet and determining an adjustment rate for the adjustment, based on a comparison result obtained by comparing the current increment with the actual current and comparing the current decrement with the actual current includes:
adjusting the number of turned-on power supply output terminals in a power supply system, based on the comparison result obtained by comparing the current increment with the actual current and comparing the current decrement with the actual current, where the power supply system is configured to supply power to the electromagnet, and the power supply system includes multiple power supply output terminals.

In an embodiment, the adjusting the current flowing through the electromagnet and determining an adjustment rate for the adjustment, based on a comparison result obtained by comparing the current increment with the actual current and comparing the current decrement with the actual current includes:
controlling the current flowing through the electromagnet to increase at a first adjustment rate, in response to the current increment being greater than the actual current and the current decrement being greater than the actual current; and
controlling the current flowing through the electromagnet to increase at a second adjustment rate, in response to the current increment being greater than the actual current and the current decrement being less than the actual current, where the first adjustment rate is greater than the second adjustment rate.

In an embodiment, after the controlling the current flowing through the electromagnet to increase at a first adjustment rate, in response to the current increment being greater than the actual current and the current decrement being greater than the actual current, the method further includes:
generating an electromagnet current warning signal, to cause a warning device to alarm when the warning device receives the electromagnet current warning signal.

In an embodiment, the adjusting the current flowing through the electromagnet and determining an adjustment rate for the adjustment, based on a comparison result obtained by comparing the current increment with the actual current and comparing the current decrement with the actual current includes:
deactivating the current flowing through the electromagnet in response to the current increment being less than the actual current and the current decrement being less than the actual current.

In order to solve the above technical problems, a system for controlling a current flowing through an electromagnet is further provided in the present disclosure. The system includes:
a first determination unit, configured to determine a current difference between a preset current and an actual current of the electromagnet;
a second determination unit, configured to determine a sum of the preset current, the current difference and a preset current offset as a current decrement, where the preset current offset is a negative value; and
an adjustment unit, configured to adjust the current flowing through the electromagnet and determine an adjustment rate for the adjustment, based on a comparison result obtained by comparing the current increment with the actual current and comparing the current decrement with the actual current.

In an embodiment, the adjustment unit includes:
a first adjustment sub-unit, configured to control the current flowing through the electromagnet to increase at a first adjustment rate, in response to the current increment being greater than the actual current and the current decrement being greater than the actual current; and
a second adjustment sub-unit, configured to control the current flowing through the electromagnet to increase at a second adjustment rate, in response to the current increment being greater than the actual current and the current decrement being less than the actual current, where the first adjustment rate is greater than the second adjustment rate.

In an embodiment, the adjustment unit further includes:
a third adjustment sub-unit, configured to deactivate the current flowing through the electromagnet in response to the current increment being less than the actual current and the current decrement being less than the actual current.

In order to solve the above technical problems, an apparatus for controlling a current flowing through an electromagnet is further provided in the present disclosure. The apparatus includes:
a memory, configured to store a computer program; and
a processor, configured to implement, when executing the computer program, the method for controlling the current flowing through the electromagnet described above.

In order to solve the above technical problems, a maglev train is further provided in the present disclosure. The maglev train includes the apparatus for controlling the current flowing through the electromagnet described above.

In order to solve the technical problems described above, a computer-readable storage medium is further provided in the present disclosure. The computer-readable storage medium stores a computer program. The computer program, when being executed by a processor, implements the method for controlling the current flowing through the electromagnet described above.

In summary, the method for controlling the current flowing through the electromagnet and the related assembly are provided according to the present disclosure. The current difference between the preset current and the actual current of the electromagnet is determined. The sum of the preset current and the current difference is determined as the current increment. The sum of the preset current, the current difference and the preset current offset is determined as the current decrement. The preset current offset is a negative value. A manner for adjusting the current flowing through the electromagnet and the adjustment rate are determined, based on the comparison result obtained by comparing the current increment with the actual current and comparing the current decrement with the actual current. Since the comparison result including four cases are obtained, the current flowing through the electromagnet can be adjusted based on different cases in the comparison result respectively, making the adjustment of the current flowing through the electromagnet refined and precise.

### BRIEF DESCRIPTION OF THE DRAWINGS

In order to illustrate technical solutions in embodiments of the present disclosure more clearly, drawings to be used in the description of the conventional technology and the embodiments are simply provided hereinafter. It is apparent that the drawings described below are only some embodiments of the present disclosure, and other drawings may be obtained by those skilled in the art based on the provided drawings without any creative effort.
FIG. 1 is a flowchart of a method for controlling a current flowing through an electromagnet according to the present disclosure;
FIG. 2 is a schematic structural diagram of a system for controlling a current flowing through an electromagnet according to the present disclosure; and
FIG. 3 is a schematic structural diagram of an apparatus for controlling a current flowing through an electromagnet according to the present disclosure.

### DETAILED DESCRIPTION

The core of the present disclosure is to provide a method for controlling a current flowing through an electromagnet and a related assembly, to adjust the current flowing through the electromagnet in a refined and precise manner.

In order to make the objective, the technical solutions and advantages of the embodiments of the present disclosure more clear, the technical solutions in the embodiments of the present disclosure are described below clearly and completely in conjunction with the drawings in the embodiments of the present disclosure. Apparently, the embodiments described are only some embodiments of the present disclosure, rather than all the embodiments. All other embodiments obtained by those skilled in the art based on the embodiments in the present disclosure without any creative work fall within the protection scope of the present disclosure.

Controlling a current flowing through an electromagnet in a maglev train is a core part for maglev train control. In the conventional technology, the control of the current flowing through the electromagnet is mostly implemented through directly comparing an actual current with a preset current of the electromagnet. The current flowing through the electromagnet is increased in a case that the actual current is less than the preset current, and the current flowing through the electromagnet is decreased in a case that the actual current is greater than the preset current. It can be seen that the method for adjusting the current flowing through the electromagnet according to the conventional technology is relatively rough, failing to adjust the current flowing through the electromagnet in precise manner from multiple dimensions.

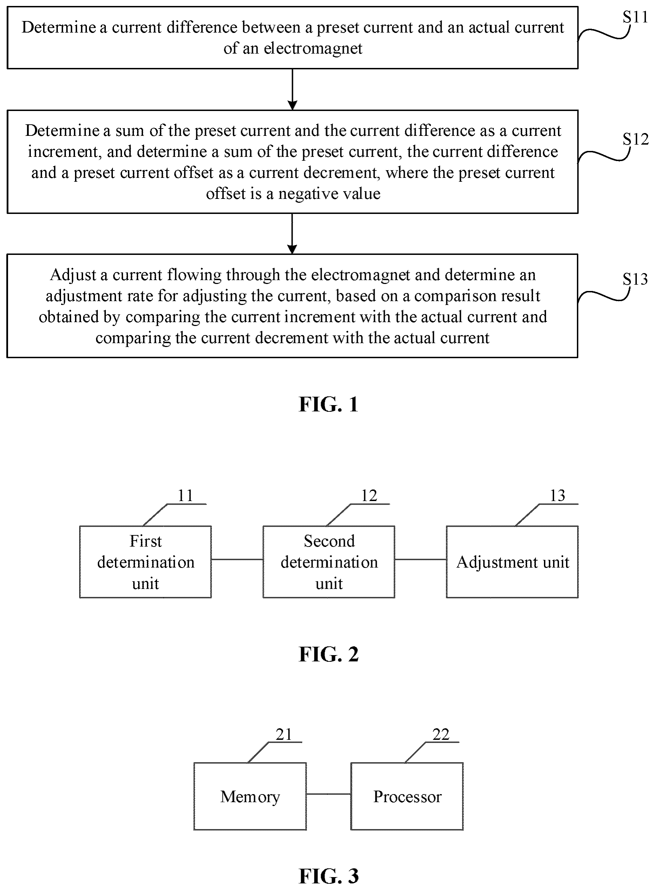

Reference is made to FIG. 1, which is a flowchart of a method for controlling a current flowing through an electromagnet according to the present disclosure. The method includes the following steps S1 to S3.

In step S1, a current difference between a preset current and an actual current of the electromagnet is determined.

In step S2, a sum of the preset current and the current difference is determined as a current increment, and a sum of the preset current, the current difference and a preset current offset is determined as a current decrement. The preset current offset is a negative value.

In step S3, the current flowing through the electromagnet is adjusted and an adjustment rate for adjusting the current is determined, based on a comparison result obtained by comparing the current increment with the actual current and comparing the current decrement with the actual current.

In this embodiment, the current flowing through the electromagnet is controlled based on the comparison result obtained by comparing the current increment with the actual current and comparing the current decrement with the actual current. The comparison result includes four cases: the current increment being greater than the actual current and the current decrement being greater than the actual current; the current increment being greater than the actual current and the current decrement being less than the actual current; the current increment being less than the actual current and the current decrement being greater than the actual current; and the current increment being less than the actual current and the current decrement being less than the actual current. Therefore, in practice, the current flowing through the electromagnet are controlled respectively for the four cases described above based on requirements, making the control of the current flowing through the electromagnet refined and precise.

In an embodiment, the difference between the actual current and the preset current of the electromagnet is determined firstly. The specific value of the preset current is not limited in the present disclosure may be determined based on actual situations. Then, the sum of the preset current and the current difference is determined as the current increment, and the sum of the preset current, the current difference and the preset current offset is determined as the current decrement. The preset current offset is a negative value. According to the present disclosure, the sum of the preset current, the current difference and the preset current offset is calculated, where the preset current offset serves to lower the total sum, facilitating identification and determination of the comparison result between the current decrement and the actual current, thereby facilitating the determination of the current adjustment mode for the electromagnet. According to the present disclosure, after the current increment and the current decrement are determined, the current increment and the actual current are compared, and the current decrement and the actual current are compared, so as to obtain the four different cases included in the comparison result, so that the current flowing through the electromagnet is adjusted and the adjustment rate for adjusting the current is determined based on the different cases in the comparison result.

It should be noted that both the preset current and the actual current have directions according to the present disclosure. During calculation, the actual current may be positive or negative. However, whether the actual current is positive or negative, calculation is performed through the method for controlling the current flowing through the electromagnet provided in the present disclosure without additionally changing the plus-minus sign of the actual current.

For example, in a case that the current increment is greater than the actual current and the current decrement is greater than the actual current, the current flowing through the electromagnet is controlled to increase at a first adjustment rate. If the current increment is greater than the actual current and the current decrement is greater than the actual current, it is indicated that a sum of the preset current and the current difference is greater than the actual current, and a sum of the preset current, the current difference and the preset current offset is still greater than the actual current. In this case, according to the present disclosure, it is determined that the actual current is excessively small, and the current flowing through the electromagnet is increased rapidly at the first adjustment rate.

In addition, in view of the fact that when the current increment is greater than the actual current and the current decrement is also greater than the actual current, the actual current flowing through the electromagnet is relatively small. In order to remind an operation and maintenance personnel to monitor the normal operation of the electromagnet, a warning signal may further be generated on detecting that the current increment is greater than the actual current and the current decrement is greater than the actual current. A warning device issues an alarm when receiving the warning signal, and the warning device may be an indicator light or a buzzer, and the like.

In a case that the current increment is greater than the actual current and the current decrement is less than the actual current, the current flowing through the electromagnet is controlled to increase at a second adjustment rate. If the current increment is greater than the actual current and the current decrement is less than the actual current, it is indicated that the sum of the preset current and the current difference is greater than the actual current, while the sum of the preset current, the current difference and the preset current offset is less than the actual current. In this case, according to the present disclosure, it is determined that the actual current is slightly less than the preset current, and the current flowing through the electromagnet is increased slowly at the second adjustment rate. The second adjustment rate is less than the first adjustment rate.

In a case that current increment is less than the actual current and the current decrement is less than the actual current, the current flowing through the electromagnet is deactivated. If the current increment is less than the actual current and the current decrement is less than the actual current, it is indicated that the sum of the preset current and the current difference is less than the actual current, and the sum of the preset current, the current difference and the preset current offset is less than the actual current. In this case, according to the present disclosure, it is determined that the actual current is sufficiently large, the power supplied to the electromagnet is turned off, and the maglev train can operate normally.

In practice, controlling the current flowing through the electromagnet for the above three cases can generally meet the requirements. If a more precise control strategy for the current flowing through the electromagnet is required, the current flowing through the electromagnet may be slowly decreased in a case that the current increment is less than the actual current and the current decrement is greater than the actual current, which is not introduced in the present disclosure.

In summary, the method for controlling the current flowing through the electromagnet is provided according to the present disclosure. The current difference between the preset current and the actual current of the electromagnet is determined. The sum of the preset current and the current difference is determined as the current increment. The sum of the preset current, the current difference and the preset current offset is determined as the current decrement. The preset current offset is a negative value. A manner for adjusting the current flowing through the electromagnet and the adjustment rate are determined, based on the comparison result obtained by comparing the current increment with the actual current and comparing the current decrement with the actual current, making the adjustment of the current flowing through the electromagnet refined and precise.

Based on the above embodiment, in an embodiment, the determining a current difference between a preset current and an actual current of the electromagnet includes:
obtaining a filtered preset current outputted by a first low-pass filter, where the filtered preset current is obtained by filtering the preset current via the first low-pass filter;
obtaining a filtered actual current outputted by a second low-pass filter, where the filtered actual current is obtained by filtering the actual current via the second low-pass filter; and
determining a difference between the filtered preset current and the filtered actual current, and determining the difference as the current difference.

In this embodiment, for the reliability of controlling the current flowing through the electromagnet, low-pass filtering is performed on the preset current via the first low-pass filter to obtain the filtered preset current, low-pass filtering is performed on the actual current via the second low-pass filter to obtain the filtered actual current, and then the difference between the filtered preset current and the filtered actual current is determined as the current difference, thereby eliminating an error in the current difference caused by noise. According to the present disclosure, the specific structures of the first low-pass filter and the second low-pass filter are not particularly limited, which may be selected based on actual situations.

In an embodiment, after the determining a current difference between a preset current and an actual current of the electromagnet, the method further includes:
determining a maximum value in a preset current difference range as the current difference, in response to the current difference being greater than the maximum value in the preset current difference range; and
determining a minimum value in the preset current difference range as the current difference, in response to the current difference being less than the minimum value in the preset current difference range.

In view of the fact that the calculation of the current difference is affected by various aspects such as processing capability, the current difference is clamped within a reasonable range, that is, the preset current difference range in this embodiment. If the current difference exceeds the preset current difference range, subsequent calculation may be interfered with, affecting the control of the current flowing through the electromagnet. Therefore, in this embodiment, if the current difference is greater than the maximum value in the preset current difference range, the maximum value is determined as the current difference, and if the current difference is less than the minimum value in the preset current difference range, the minimum value is determined as the current difference. That is, if the current difference exceeds the preset current difference range, the current difference is clamped within a reasonable range to ensure the reliability of controlling the current flowing through the electromagnet.

In an embodiment, the adjusting the current flowing through the electromagnet and determining an adjustment rate for adjusting the current, based on a comparison result obtained by comparing the current increment with the actual current and comparing the current decrement with the actual current includes:
adjusting the number of turned-on power supply output terminals in a power supply system, based on the comparison result obtained by comparing the current increment with the actual current and comparing the current decrement with the actual current, where the power supply system is configured to supply power to the electromagnet, and the power supply system includes multiple power supply output terminals.

In this embodiment, a method for controlling the current flowing through the electromagnet is provided, realizing precise control. A power supply system that supplies power to the electromagnet is configured with multiple power supply output terminals, and the current flowing through the electromagnet various with the change of the number of turned-on power supply output terminals in the power supply system. For example, in the case that the current increment is greater than the actual current and the current decrement is greater than the actual current, it is required to control the current flowing through the electromagnet to increase at the first adjustment rate, and all power supply output terminals of the power supply system are turned on to meet the requirements. In the case that the current increment is greater than the actual current and the current decrement is less than the actual current, it is required to control the current flowing through the electromagnet to increase at the second adjustment rate, and part of the power supply output terminals of the power supply system are turned on to meet the requirements. In the case that the current increment is less than the actual current and the current decrement is less than the actual current, all power supply output terminals of the power supply system are turned off to meet the requirements.

Reference is made to FIG. 2, which is a schematic structural diagram of a system for controlling a current flowing through an electromagnet according to the present disclosure. The system includes a first determination unit 11, a second determination unit 12, and an adjustment unit 13.

The first determination unit 11 is configured to determine a current difference between a preset current and an actual current of the electromagnet.

The second determination unit 12 is configured to determine a sum of the preset current, the current difference and a preset current offset as a current decrement. The preset current offset is a negative value.

The adjustment unit 13 is configured to adjust a current flowing through the electromagnet and determine an adjustment rate for adjusting the current based on a comparison result obtained by comparing the current increment with the actual current and comparing the current decrement with the actual current.

For the relevant description of the system for controlling the current flowing through the electromagnet provided according to the present disclosure, reference may be made to the embodiments of the method for controlling the current flowing through the electromagnet described above, which is not repeated here.

Based on the embodiments described above, in an embodiment, the first determination unit 11 includes a filtered preset current obtaining unit, a filtered actual current obtaining unit and a first determination sub-unit.

A filtered preset current obtaining unit is configured to obtain a filtered preset current outputted by a first low-pass filter, where the filtered preset current is obtained by filtering the preset current via the first low-pass filter.

A filtered actual current obtaining unit is configured to obtain a filtered actual current outputted by a second low-pass filter, where the filtered actual current is obtained by filtering the actual current via the second low-pass filter.

A first determination sub-unit is configured to determine a difference between the filtered preset current and the filtered actual current, and determine the difference as the current difference.

In an embodiment, the system further includes a first clamping unit and a second clamping unit.

The first clamping unit is configured to, after the current difference between the preset current and the actual current of the electromagnet is determined, determine a maximum value in a preset current difference range as the current difference if the current difference is greater than the maximum value in the preset current difference range.

The second clamping unit is configured to, after the current difference between the preset current and the actual current of the electromagnet is determined, determine a minimum value in the preset current difference range as the current difference if the current difference is less than the minimum value in the preset current difference range.

In an embodiment, the adjustment unit is further configured to adjust the number of turned-on power supply output terminals in a power supply system based on the comparison result obtained by comparing the current increment with the actual current and comparing the current decrement with the actual current. The power supply system is configured to supply power to the electromagnet, and the power supply system includes multiple power supply output terminals.

In an embodiment, the adjustment unit 13 includes a first adjustment sub-unit and a second adjustment sub-unit.

The first adjustment sub-unit is configured to control the current flowing through the electromagnet to increase at a first adjustment rate if the current increment is greater than the actual current and the current decrement is greater than the actual current.

The second adjustment sub-unit is configured control the current flowing through the electromagnet to increase at a second adjustment rate if the current increment is greater than the actual current and the current decrement is less than the actual current. The first adjustment rate is greater than the second adjustment rate.

In an embodiment, the system further includes a warning unit.

The warning unit is configured to, after the current flowing through the electromagnet is controlled to increase at the first adjustment rate when the current increment is greater than the actual current and the current decrement is greater than the actual current, generate an electromagnet current warning signal, to cause a warning device to alarm when the warning device receives the electromagnet current warning signal.

In an embodiment, the adjustment unit 13 further includes a third adjustment sub-unit.

The third adjustment sub-unit is configured to deactivate the current flowing through the electromagnet if the current increment is less than the actual current and the current decrement is less than the actual current.

Reference is made to FIG. 3, which is a schematic structural diagram of an apparatus for controlling a current flowing through an electromagnet according to the present disclosure. The apparatus includes a memory 21 and a processor 22.

The memory 21 is configured to store a computer program.

The processor 22 is configured to, when executing the computer program, implement steps of the method for controlling the current flowing through the electromagnet described above.

For the detailed description of the apparatus for controlling the current flowing through the electromagnet provided according to the present disclosure, reference may be made to the embodiments of the method for controlling the current flowing through the electromagnet, which is not repeated here.

A maglev train is further provided in the present disclosure. The maglev train includes the apparatus for controlling the current flowing through the electromagnet described above.

For the detailed description of the maglev train, reference may be made to the embodiments of the method for controlling the current flowing through the electromagnet, which is not repeated here.

A computer-readable storage medium is further provided in the present disclosure. A computer program is stored in the computer-readable storage medium. When executed by a processor, the computer program implements steps in the method for controlling the current flowing through the electromagnet described above.

For the relevant description of the computer-readable storage medium provided according to the present disclosure, reference may be made to the embodiments of the method for controlling the current flowing through the electromagnet, which is not repeated here.

The embodiments in the specification are described in a progressive manner, and each embodiment focuses on the difference from other embodiments. Same and similar parts in each embodiment may be referred to each other. Since apparatuses disclosed in embodiments correspond to the method disclosed in the embodiments, the description of the apparatuses is simple, and reference may be made to the relevant part of the methods.

It should be further noted that relation terms such as "first" and "second" herein are only used to distinguish one entity or operation from another entity or operation, and does not necessarily require or imply that there is an actual relation or sequence between these entities or operations. Furthermore, the term "comprise", "include" or any other variation thereof is intended to cover a non-exclusive inclusion, so that a process, a method, an article, or a device including a set of elements includes not only those elements, but also other elements not expressly listed or elements inherent in such a process, method, article, or device. Unless expressively limited, the statement "including a..." does not exclude the case that other similar elements may exist in the process, method, article or device including the series of elements.

According to the above description of the disclosed embodiments, those skilled in the art can implement or practice the present disclosure. Various modifications to these embodiments are apparent to those skilled in the art, and the general principles defined herein can be implemented in other embodiments without departing from the spirit and scope of the present disclosure. Therefore, the present disclosure is not limited to the embodiments described herein.

## Claims

1. A method for controlling a current flowing through an electromagnet, comprising:
determining a current difference between a preset current and an actual current of the electromagnet;
determining a sum of the preset current and the current difference as a current increment, and determining a sum of the preset current, the current difference and a preset current offset as a current decrement, wherein the preset current offset is a negative value; and
adjusting the current flowing through the electromagnet and determining an adjustment rate for the adjustment, based on a comparison result obtained by comparing the current increment with the actual current and comparing the current decrement with the actual current.

2. The method for controlling the current flowing through the electromagnet according to claim 1, wherein the determining a current difference between a preset current and an actual current of the electromagnet comprises:
obtaining a filtered preset current outputted by a first low-pass filter, wherein the filtered preset current is obtained by filtering the preset current via the first low-pass filter;
obtaining a filtered actual current outputted by a second low-pass filter, wherein the filtered actual current is obtained by filtering the actual current via the second low-pass filter; and
determining a difference between the filtered preset current and the filtered actual current, and determining the difference as the current difference.

3. The method for controlling the current flowing through the electromagnet according to claim 1, wherein after the determining a current difference between a preset current and an actual current of the electromagnet, the method further comprises:
determining a maximum value in a preset current difference range as the current difference, in response to the current difference being greater than the maximum value in the preset current difference range; and
determining a minimum value in the preset current difference range as the current difference, in response to the current difference being less than the minimum value in the preset current difference range.

4. The method for controlling the current flowing through the electromagnet according to claim 1, wherein the adjusting the current flowing through the electromagnet and determining an adjustment rate for the adjustment, based on a comparison result obtained by comparing the current increment with the actual current and comparing the current decrement with the actual current comprises:
adjusting the number of turned-on power supply output terminals in a power supply system, based on the comparison result obtained by comparing the current increment with the actual current and comparing the current decrement with the actual current, wherein the power supply system is configured to supply power to the electromagnet, and the power supply system comprises a plurality of power supply output terminals.

5. The method for controlling the current flowing through the electromagnet according to any one of claims 1 to 4, wherein the adjusting the current flowing through the electromagnet and determining an adjustment rate for the adjustment, based on a comparison result obtained by comparing the current increment with the actual current and comparing the current decrement with the actual current comprises:
controlling the current flowing through the electromagnet to increase at a first adjustment rate, in response to the current increment being greater than the actual current and the current decrement being greater than the actual current; and
controlling the current flowing through the electromagnet to increase at a second adjustment rate, in response to the current increment being greater than the actual current and the current decrement being less than the actual current, wherein the first adjustment rate is greater than the second adjustment rate.

6. The method for controlling the current flowing through the electromagnet according to claim 5, wherein after the controlling the current flowing through the electromagnet to increase at a first adjustment rate, in response to the current increment being greater than the actual current and the current decrement being greater than the actual current, the method further comprises:
generating an electromagnet current warning signal, to cause a warning device to alarm when the warning device receives the electromagnet current warning signal.

7. The method for controlling the current flowing through the electromagnet according to claim 5, wherein the adjusting the current flowing through the electromagnet and determining an adjustment rate for the adjustment, based on a comparison result obtained by comparing the current increment with the actual current and comparing the current decrement with the actual current further comprises:
deactivating the current flowing through the electromagnet in response to the current increment being less than the actual current and the current decrement being less than the actual current.

8. A system for controlling a current flowing through an electromagnet, comprising:
a first determination unit, configured to determine a current difference between a preset current and an actual current of the electromagnet;
a second determination unit, configured to determine a sum of the preset current, the current difference and a preset current offset as a current decrement, wherein the preset current offset is a negative value; and
an adjustment unit, configured to adjust the current flowing through the electromagnet and determine an adjustment rate for the adjustment, based on a comparison result obtained by comparing the current increment with the actual current and comparing the current decrement with the actual current.

9. The system for controlling the current flowing through the electromagnet according to claim 8, wherein the adjustment unit comprises:
a first adjustment sub-unit, configured to control the current flowing through the electromagnet to increase at a first adjustment rate, in response to the current increment being greater than the actual current and the current decrement being greater than the actual current; and
a second adjustment sub-unit, configured to control the current flowing through the electromagnet to increase at a second adjustment rate, in response to the current increment being greater than the actual current and the current decrement being less than the actual current, wherein the first adjustment rate is greater than the second adjustment rate.

10. The system for controlling the current flowing through the electromagnet according to claim 9, wherein the adjustment unit further comprises:
a third adjustment sub-unit, configured to deactivate the current flowing through the electromagnet in response to the current increment being less than the actual current and the current decrement being less than the actual current.

11. An apparatus for controlling a current flowing through an electromagnet, comprising:
a memory, configured to store a computer program; and
a processor, configured to implement, when executing the computer program, the method for controlling the current flowing through the electromagnet according to any one of claims 1 to 7.

12. A maglev train, comprising the apparatus for controlling the current flowing through the electromagnet according to claim 11.

13. A computer-readable storage medium, storing a computer program, wherein the computer program, when being executed by a processor, implements the method for controlling the current flowing through the electromagnet according to any one of claims 1 to 7.
